# EUROPÄISCHE PATENTSCHRIFT

(11) **EP 3 251 187 B1**
(45) Veröffentlichungstag und Bekanntmachung des Hinweises auf die Patenterteilung: **02.01.2019**
(21) Anmeldenummer: 16707420.2
(22) Anmeldetag: 01.03.2016
(51) Int. Cl.: H02H 3/40, G01R 31/08, H02H 7/22

(54) **SCHUTZEINRICHTUNG, ANORDNUNG UND VERFAHREN FÜR EINEN DISTANZSCHUTZ EINER FAHRLEITUNG EINER BAHNSTROMVERSORGUNG**
PROTECTIVE DEVICE, ARRANGEMENT AND METHOD FOR THE DISTANCE PROTECTION OF A CONTACT LINE OF A TRACTION POWER SUPPLY
DISPOSITIF DE PROTECTION, SYSTÈME ET PROCÉDÉ POUR UNE PROTECTION D'ÉCARTEMENT D'UNE CATÉNAIRE D'UNE ALIMENTATION ÉLECTRIQUE DE TRACTION FERROVIAIRE

(30) Priorität: 20.03.2015 DE 102015205116
(43) Veröffentlichungstag der Anmeldung: 06.12.2017
(73) Patentinhaber: Siemens Mobility GmbH, 81739 München (DE)
(72) Erfinder: ALTMANN, Martin, 91054 Erlangen (DE); BIANCHI, Roberto, 91056 Erlangen (DE); BRODKORB, Albrecht, 99820 Hörselberg-Hainich (DE); DILLMANN, Klaus-Peter, 90587 Obermichelbach (DE); GRUBER, Rainer, 91560 Heilsbronn (DE)
(86) Internationale Anmeldenummer: PCT/EP2016/054277
(87) Internationale Veröffentlichungsnummer: WO 2016/150658

(56) Entgegenhaltungen:
- WO-A2-2013/045242
- US-A- 2 238 626

## Beschreibung

Die Erfindung betrifft eine Schutzeinrichtung nach dem Oberbegriff des Anspruchs 1 sowie eine entsprechende Anordnung mit der Schutzeinrichtung für einen Distanzschutz einer Fahrleitung einer Bahnstromversorgung gemäß Anspruch 6 sowie ein entsprechendes Verfahren nach dem Anspruch 12.

Moderne Schutzkonzepte für Fahrleitungen von Bahnstromversorgungen basieren häufig auf dem Ansatz des Distanzschutzes. Es wird eine Schutzeinrichtung eingesetzt, um bei einem anhand der Impedanz einer Fahrleitung einer Bahnstromversorgung erkannten Kurzschluss ein Signal für ein Öffnen eines Leistungsschalters bereit zu stellen und die betroffene Fahrleitung abzuschalten.

Dabei wird kontinuierlich die Impedanz der Fahrleitung bzw. eines Speiseabschnitts festgestellt. Ist die Impedanz größer als ein vorher festgelegter Schwellenwert, so wird die Leitung als fehlerfrei betrachtet. Sinkt die Impedanz unter den Schwellenwert, wird einen Kurzschluss angenommen und die Leitung wird abgeschaltet. Der Schwellenwert wird häufig bei Inbetriebnahme einer Bahnstrecke anhand der Leitungsparameter in einer so genannten Schutzstudie berechnet und anschließend für den Distanzschutz verwendet. Dabei kann der Schwellenwert ein einfacher Zahlenwert sein oder auch komplexer. Beispielsweise kann die Impedanz als komplexwertige Funktion in einem Diagramm angegeben werden und anstatt eines Schwellenwertes ein Schwellenbereich angegeben werden, so dass bei Impedanzwerten innerhalb des Schwellenbereichs ein Kurzschluss angenommen wird.

Der Distanzschutz kommt bei sehr langen Leitungen an seine Grenzen. Bei Kurzschluss am Ende einer langen Leitung ist die Leitungsimpedanz nicht besonders niedrig. Im extremen Fall kann die Kurzschlussimpedanz am Ende der Leitung bereits im Impedanzbereich des normalen Betriebs (insbesondere für beschleunigende Züge) liegen. In diesem Fall kann der Distanzschutz nicht mehr zwischen Kurzschluss und normalem Betrieb entscheiden.

Eine gängige Technik um dieses Problem zu lösen ist die Kombination von Distanzschutz und sog. Delta-, oder Anstiegsgeschwindigkeitsfunktionen. Dabei wird der Schwellenwert bewusst im Bereich des normalen Betriebs der Bahnstromversorgung festgelegt und anhand von Ableitungen gemessener elektrischer Größen wie Spannung und Stromstärke die Delta Functions gebildet. Diese zeigen Strom- oder Spannungssprünge, wie sie bei Kurzschlüssen auftreten, an. Sind solche Strom- oder Spannungssprünge nicht erkennbar, liegt kein Kurzschluss sondern ein gewöhnlicher Betriebsfall vor.

Ferner ist es aus dem Fachartikel "IEC 61850 On Wheels: The Integrated Traction Protection Network" von D B Hewings von Network Rail UK, erschienen in "Developments in Power System Protection (DPSP 2014), 12th IET International Conference", 31.03.2014-03.04.2014, bekannt, Züge und Unterwerke mit erweiterten Kommunikationsmöglichkeiten im IEC 61850 Standard auszurüsten.

Aus der US 2,238,626 A ist eine Schutzeinrichtung bekannt, die einen Leistungsschalter bei einem erkannten Kurzschluss öffnet.

Die WO 2013/045242 A2 beschreibt eine Fahrleitungsanlage zur Traktionsversorgung eines elektrischen Triebfahrzeugs, die ein Relais zur Unterbrechung der Energiezufuhr bei einem Störfall umfasst.

An die Erfindung stellt sich ausgehend von einer bekannten Schutzeinrichtung die Aufgabe, eine Schutzeinrichtung anzugeben, die im Betrieb einer Bahnstromversorgung einen verbesserten Distanzschutz ermöglicht.

Die Erfindung löst diese Aufgabe durch eine Schutzeinrichtung gemäß Anspruch 1.

Es ist ein wesentlicher Vorteil der erfindungsgemäßen Anordnung, dass die Entscheidung des Distanzschutzes nicht mehr ausschließlich durch die stochastische (und damit unsichere) Auswertung von Strom- bzw. Spannungssprüngen erfolgt, sondern durch eine Echtzeit-Interaktion mit dem Fahrzeug. Dies erhöht die Sicherheit des Schutzes, da die Akteure direkt abgefragt werden anstatt dass Schlüsse aus dem Systemzustand gezogen werden.

In einer bevorzugten Ausführungsform der erfindungsgemäßen Schutzeinrichtung ist die Schutzeinrichtung ausgebildet, die Impedanz der Fahrleitung festzustellen und einen Kurzschluss auszuschließen, wenn ein erhöhter Energiebedarf übermittelt wurde und die Impedanz einen vorher festgelegten Schwellenwert unterschreitet. Dies ist ein Vorteil, weil auf diese Weise unnötige Abschaltungen von Fahrleitungen oder Speiseabschnitten vermieden werden.

In einer weiteren bevorzugten Ausführungsform der erfindungsgemäßen Schutzeinrichtung ist die Schutzeinrichtung ausgebildet, einen Kurzschluss zu erkennen, wenn kein erhöhter Energiebedarf übermittelt wurde und die Impedanz den vorher festgelegten Schwellenwert unterschreitet. Dies ist ein Vorteil, weil Kurzschlüsse so sicher abgeschaltet werden können.

In einer weiteren bevorzugten Ausführungsform der erfindungsgemäßen Schutzeinrichtung ist die Schutzeinrichtung für die Berücksichtigung von Fahrzeuginformationen geeignet, die mindestens eine der folgenden Informationen umfassen: eine per Satellitensignal ermittelte Position, insbesondere eine GPS-Position, des Fahrzeugs; einen Speiseabschnittbezeichner, der die Position der derzeit vom Fahrzeug genutzten Speiseabschnitt angibt; Strom- und Spannungsmesswerte der Fahrleitung an der aktuellen Position; ein binäres Kennzeichen für erhöhten Energiebedarf des Fahrzeugs, das insbesondere bei Beschleunigungsvorgängen als wahr gekennzeichnet wird; ein binäres Kennzeichen für Bremsenergierückspeisung des Fahrzeugs, das insbesondere bei Bremsvorgängen als wahr gekennzeichnet wird.

In einer weiteren bevorzugten Ausführungsform der erfindungsgemäßen Schutzeinrichtung ist die Schutzeinrichtung für einen Distanzschutz einer Fahrleitung mit mehreren Speiseabschnitten ausgebildet, eine Erkennung eines Kurzschlusses jeweils spezifisch für den vom Kurzschluss betroffenen Speiseabschnitt vorzunehmen und die Auswirkung des erhöhten Energiebedarfs des mindestens einen elektrisch antreibbaren Fahrzeugs in dem jeweiligen Speiseabschnitt zu berücksichtigen.

In einer Weiterbildung der vorgenannten Ausführungsform ist die Schutzeinrichtung ausgebildet, die Auswirkung des erhöhten Energiebedarfs des mindestens einen elektrisch antreibbaren Fahrzeugs und/oder weiterer elektrisch antreibbarer Fahrzeuge in dem jeweiligen Speiseabschnitt direkt benachbarten Speiseabschnitten und/oder in den an die direkt benachbarten Speiseabschnitte angrenzenden Speiseabschnitten zu berücksichtigen.

Ferner stellt sich an die Erfindung die Aufgabe, eine Anordnung mit der erfindungsgemäßen Schutzeinrichtung für einen Distanzschutz einer Fahrleitung einer Bahnstromversorgung anzugeben, die einen verbesserten Distanzschutz bietet.

Die Erfindung löst diese Aufgabe durch eine Anordnung gemäß Anspruch 6.

In einer bevorzugten Ausführungsform der erfindungsgemäßen Anordnung weisen das mindestens eine elektrisch antreibbare Fahrzeug eine erste Kommunikationseinrichtung für das Senden von Fahrzeuginformationen und die Schutzeinrichtung eine zweite Kommunikationseinrichtung für das Empfangen der Fahrzeuginformationen auf. Dabei können die Fahrzeuginformationen beispielsweise über Funkverbindungen übertragen werden. Besonders gut geeignet sind Übertragungen nach dem GSM-R Standard, da dieser für den Bahnbetrieb entwickelt wurde.

In einer weiteren bevorzugten Ausführungsform der erfindungsgemäßen Anordnung sind der Leistungsschalter und/oder die Schutzeinrichtung Teil eines Unterwerks einer Bahnstromversorgung. Dies ist ein Vorteil, weil die räumliche Gruppierung der Komponenten in einem Unterwerk weit verbreitet und platzsparend ist.

In einer weiteren bevorzugten Ausführungsform der erfindungsgemäßen Anordnung ist das mindestens eine elektrisch antreibbare Fahrzeug ein Schienenfahrzeug.

In einer weiteren bevorzugten Ausführungsform der erfindungsgemäßen Anordnung ist das mindestens eine elektrisch antreibbare Fahrzeug ein Straßenfahrzeug. Dabei kann es sich beispielsweise um einen Elektrobus oder einen Diesel-Hybrid-Bus mit Stromabnehmer handeln. Auch Grubenlaster verfügen häufig über einen elektrischen Zusatzantrieb.

In einer weiteren bevorzugten Ausführungsform der erfindungsgemäßen Anordnung ist das mindestens eine elektrisch antreibbare Fahrzeug zur Übermittlung der ersten Fahrzeuginformationen nach dem Standard IEC 61850 ausgebildet. Dies ist ein Vorteil, weil dieser Standard für die Datenkommunikation in der Schutztechnik weit verbreitet und erprobt ist.

Ferner stellt sich an die Erfindung die Aufgabe, ein Verfahren für einen Distanzschutz einer Fahrleitung einer Bahnstromversorgung anzugeben, das einen verbesserten Distanzschutz bietet.

Die Erfindung löst diese Aufgabe durch ein Verfahren nach Anspruch 12. Bevorzugte Ausführungsformen des erfindungsgemäßen Verfahrens ergeben sich aus den abhängigen Ansprüchen 13 bis 15. Es ergeben sich dabei für das erfindungsgemäße Verfahren und seine Ausführungsformen jeweils sinngemäß die gleichen Vorteile wie eingangs für die erfindungsgemäße Schutzeinrichtung und Anordnung erläutert.

Im Folgenden wird ein bevorzugtes Ausführungsbeispiel der erfindungsgemäßen Anordnung durch eine Figur näher erläutert. Dem Fachmann ist dabei offensichtlich, dass das Ausführungsbeispiel keine Einschränkung der Erfindung auf eine bestimmte Merkmalskombination beabsichtigt, sondern vielmehr mit allen im Beschreibungsteil erläuterten Ausführungsformen kombiniert werden kann.

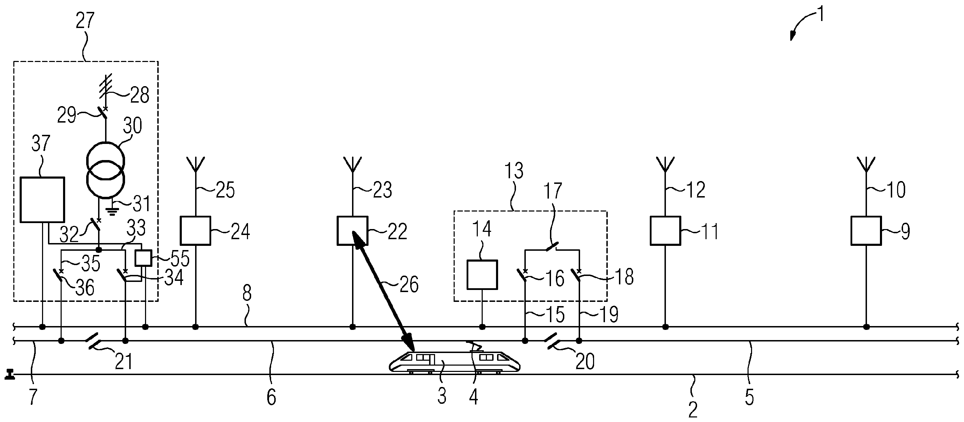

In der Figur ist ein bevorzugtes Ausführungsbeispiel einer erfindungsgemäßen Anordnung 1 abgebildet. Auf einem Bahngleis 2 fährt ein Schienenfahrzeug - ein Zug - 3 mit einem Stromabnehmer 4. Der Stromabnehmer nimmt elektrische Energie aus einer Fahrleitung 5,6,7 ab, die in mehrere durch Trennstellen 20,21 getrennte Speiseabschnitte 5,6,7 geteilt ist.

Entlang der Bahnstrecke sind in regelmäßigen Abständen Funkstationen 9,11,22,24 mit Funkantennen 10,12,23,25 angebracht, die vom Zug 3 Fahrzeuginformationen 26 mittels des GSM-R Funkstandards empfangen können. Die Funkstationen 9,11,22,24 sind untereinander über einen Kommunikationsbus 8 - beispielsweise über ein Kabel oder eine internetbasierte Verbindung - verbunden. Der Kommunikationsbus kann ein oder mehrere Protokolle unterstutzen, beispielweise eine Datenübertragung nach dem Standard IEC 61850. An den Kommunikationsbus 8 sind auch ein Unterwerk 27 und eine Schaltstelle 13 angeschlossen, die jeweils beidseitig in die an sie angeschlossenen Speiseabschnitte 5,6,7 speisen.

Die Schaltstelle 13 weist eine Stationsleittechnik 14 sowie zwei Speiseanschlüsse 15,19 auf, die mit zwei Leistungsschaltern 16, 19 und einem Trennschalter 17 ausgerüstet sind.

Das Unterwerk 27 weist eine Stationsleittechnik 37 sowie zwei Speiseanschlüsse 33,35 auf, die mit zwei Leistungsschaltern 34,36 ausgerüstet sind. Eine Schutzeinrichtung 55 für das Öffnen des Leistungsschalters 34 im Falle eines Kurzschlusses auf dem dem Leistungsschalter 34 nachgeordneten Speiseabschnitt 6 ist vorgesehen. Die Speiseanschlüsse 33,35 werden über einen an den Leistungsschalter 32 angeschlossenen Transformator 30 mit elektrischer Energie versorgt, der fahrleitungsseitig eine weitere Phase auf Erdpotential 31 aufweist. Auf Seiten der Energieversorgung 28 ist über einen Leistungsschalter 29 ein dreiphasiges Hochspannungsnetz an den Transformator 30 angeschlossen.

Im Folgenden soll nun kurz auf die Funktionsweise der Anordnung 1 eingegangen werden. Fährt das erste Fahrzeug 3 auf den Gleisen 2 und wird es durch die Fahrleitung im Speiseabschnitt 6 versorgt, so ist der Leistungsschalter 16 geöffnet und die Leistungsschalter 34,32,29 sind geschlossen.

Das Fahrzeug 3 meldet bei einem bevorstehenden oder bereits begonnenen Beschleunigungsvorgang Fahrzeuginformationen 26 wie z.B. seine per GPS ermittelte Position per Funk an eine nahe Funkstation 22. Weiterhin meldet es als Teil der Fahrzeuginformation die Position und/oder einen Bezeichner, der den derzeit vom Fahrzeug genutzten Speiseabschnitt angibt. Auch Strom- und Spannungsmesswerte der Fahrleitung an der aktuellen Position werden übermittelt sowie der erwartete erhöhte Energiebedarf beim Beschleunigen.

Außerdem wird ein binäres Kennzeichen - ein so genanntes "Flag" - für erhöhten Energiebedarf des Fahrzeugs, das insbesondere bei Beschleunigungsvorgängen als wahr gekennzeichnet wird, übertragen. Da das Fahrzeug beschleunigt wird das Kennzeichen für erhöhten Energiebedarf als "wahr" übertragen.

Des Weiteren wird ein binäres Kennzeichen für Bremsenergierückspeisung des Fahrzeugs, das insbesondere bei Bremsvorgängen als wahr gekennzeichnet wird, übertragen. Weil das Fahrzeug nicht bremst, wird dieses Kennzeichen als "falsch" übertragen.

Die bei der Funkstation 22 empfangenen Fahrzeuginformationen 26 werden mittels des Kommunikationsbusses 8 an die Schutzeinrichtung 55 übermittelt.

Die Schutzeinrichtung 55 erkennt anhand der ersten Fahrzeuginformationen einen erhöhten Energiebedarf. Stellt die Schutzeinrichtung 55 fest, dass die Impedanz des Speiseabschnitts 6 der Fahrleitung unter einem vorher festgelegten Grenzwert liegt, so liegt in der Regel ein Kurzschluss bzw. ein Fehler auf dem Speiseabschnitt 6 vor.

Ist der Speiseabschnitt 6 jedoch sehr lang, kann die Impedanz der Fahrleitung auch ohne Kurzschluss unter dem vorher festgelegten Grenzwert liegen, wenn ein Fahrzeug 3 in diesem Speiseabschnitt beschleunigt und besonders viel elektrische Energie abnimmt. In diesem Fall lässt die Schutzeinrichtung den Leistungsschalter 34 geschlossen.

Wird kein erhöhter Energiebedarf gemeldet und liegt die Impedanz unter dem vorher festgelegten Schwellenwert, so wird von einem Kurzschluss ausgegangen. Der Leistungsschalter 34 wird geöffnet und der Speiseabschnitt 6 abgeschaltet.

Es ist ein wesentlicher Vorteil der erfindungsgemäßen Anordnung, dass die Entscheidung des Distanzschutzes nicht mehr ausschließlich durch die stochastische (und damit unsichere) Auswertung von Strom- bzw. Spannungssprüngen erfolgt, sondern durch eine Echtzeit-Interaktion mit dem Fahrzeug. Dies erhöht die Sicherheit des Schutzes, da die Akteure direkt abgefragt werden anstatt dass Schlüsse aus dem Systemzustand gezogen werden.

## Patentansprüche

1. Schutzeinrichtung (55), wobei die Schutzeinrichtung (55) ausgebildet ist, ein Signal für ein Öffnen eines Leistungsschalters (34) bei einem anhand der Impedanz einer Fahrleitung (5,6,7) einer Bahnstromversorgung erkannten Kurzschluss bereit zu stellen,
**dadurch gekennzeichnet, dass**
die Schutzeinrichtung (55) geeignet ist, Fahrzeuginformationen (26) über einen erhöhten Energiebedarf von mindestens einem elektrisch antreibbaren Fahrzeug (3) zu empfangen und die Auswirkung des erhöhten Energiebedarfs auf die Impedanz der Fahrleitung (5,6,7) zu berücksichtigen.

2. Schutzeinrichtung (55) nach Anspruch 1, **dadurch gekennzeichnet, dass** die Schutzeinrichtung (55) ausgebildet ist, die Impedanz der Fahrleitung (5,6,7) festzustellen und einen Kurzschluss auszuschließen, wenn ein erhöhter Energiebedarf übermittelt wurde und die Impedanz einen vorher festgelegten Schwellenwert unterschreitet.

3. Schutzeinrichtung (55) nach Anspruch 1 oder 2, **dadurch gekennzeichnet, dass** die Schutzeinrichtung (55) ausgebildet ist, einen Kurzschluss zu erkennen, wenn kein erhöhter Energiebedarf übermittelt wurde und die Impedanz den vorher festgelegten Schwellenwert unterschreitet.

4. Schutzeinrichtung (55) nach Anspruch 4, **dadurch gekennzeichnet, dass** Schutzeinrichtung (55) für die Berücksichtigung von Fahrzeuginformationen (26) geeignet ist, die mindestens eine der folgenden Informationen umfassen: eine per Satellitensignal ermittelte Position, insbesondere eine GPS-Position, des Fahrzeugs; einen Speiseabschnittbezeichner, der die Position der derzeit vom Fahrzeug genutzten Speiseabschnitt angibt; Strom- und Spannungsmesswerte der Fahrleitung an der aktuellen Position; ein binäres Kennzeichen für erhöhten Energiebedarf des Fahrzeugs, das insbesondere bei Beschleunigungsvorgängen als wahr gekennzeichnet wird; ein binäres Kennzeichen für Bremsenergierückspeisung des Fahrzeugs, das insbesondere bei Bremsvorgängen als wahr gekennzeichnet wird.

5. Schutzeinrichtung (55) nach Anspruch 4, **dadurch gekennzeichnet, dass** die Schutzeinrichtung (55) für einen Distanzschutz einer Fahrleitung mit mehreren Speiseabschnitten (5, 6, 7) ausgebildet ist, eine Erkennung eines Kurzschlusses jeweils spezifisch für den vom Kurzschluss betroffenen Speiseabschnitt (5,6,7) vorzunehmen und die Auswirkung des erhöhten Energiebedarfs des mindestens einen elektrisch antreibbaren Fahrzeugs (3) in dem jeweiligen Speiseabschnitt zu berücksichtigen.

6. Anordnung (1) für einen Distanzschutz einer Fahrleitung (5,6,7) einer Bahnstromversorgung, aufweisend:
mindestens ein elektrisch antreibbares Fahrzeug (3),
einen Leistungsschalter (34) für ein Verbinden eines Energieversorgungsnetzes (28) mit der Fahrleitung (5,6,7), und
eine Schutzeinrichtung (55) nach einem der vorhergehenden Ansprüche,
**dadurch gekennzeichnet, dass**
das Fahrzeug (3) geeignet ist, einen erhöhten Energiebedarf an die Schutzeinrichtung (55) zu übermitteln, und
die Schutzeinrichtung (55) geeignet ist, die Auswirkung des erhöhten Energiebedarfs des mindestens einen elektrisch antreibbaren Fahrzeugs (3) auf die Impedanz der Fahrleitung (5,6,7) zu berücksichtigen.

7. Anordnung (1) nach Anspruch 6, **dadurch gekennzeichnet, dass** das mindestens eine elektrisch antreibbare Fahrzeug (3) eine erste Kommunikationseinrichtung für das Senden von Fahrzeuginformationen (26) und die Schutzeinrichtung (55) eine zweite Kommunikationseinrichtung für das Empfangen der Fahrzeuginformationen (26) aufweisen.

8. Anordnung (1) nach einem der Ansprüche 6 oder 7, **dadurch gekennzeichnet, dass** der Leistungsschalter (34) und/oder die Schutzeinrichtung (55) Teil eines Unterwerks (27) einer Bahnstromversorgung sind.

9. Anordnung (1) nach einem der Ansprüche 6 bis 8, **dadurch gekennzeichnet, dass** das mindestens eine elektrisch antreibbare Fahrzeug (3) ein Schienenfahrzeug ist.

10. Anordnung (1) nach einem der Ansprüche 6 bis 8, **dadurch gekennzeichnet, dass** das mindestens eine elektrisch antreibbare Fahrzeug (3) ein Straßenfahrzeug ist.

11. Anordnung (1) nach einem der Ansprüche 6 bis 10, **dadurch gekennzeichnet, dass** das mindestens eine elektrisch antreibbare Fahrzeug (3) zur Übermittlung der ersten Fahrzeuginformationen (26) nach dem Standard IEC 61850 ausgebildet ist.

12. Verfahren für einen Distanzschutz einer Fahrleitung (5,6,7) einer Bahnstromversorgung mittels einer Schutzeinrichtung nach einem der Ansprüche 1 bis 5, umfassend die Schritte:
Feststellen einer Impedanz der Fahrleitung oder eines Speiseabschnitts (5,6,7);
Empfangen von Fahrzeuginformationen (26) über einen erhöhten Energiebedarf von mindestens einem elektrisch antreibbaren Fahrzeug (3) und berücksichtigen der Auswirkung des erhöhten Energiebedarfs auf die Impedanz der Fahrleitung (5,6,7);
Bereitstellen eines Signals für ein Öffnen eines Leistungsschalters (34) bei einem anhand der Impedanz erkannten Kurzschluss.

13. Verfahren nach Anspruch 12, **dadurch gekennzeichnet, dass** mittels der Schutzeinrichtung (55) ein Kurzschluss ausgeschlossen wird, wenn ein erhöhter Energiebedarf übermittelt wurde und die Impedanz einen vorher festgelegten Schwellenwert unterschreitet.

14. Verfahren nach Anspruch 12 oder 13, **dadurch gekennzeichnet, dass** mittels der Schutzeinrichtung (55) ein Kurzschluss erkannt wird, wenn kein erhöhter Energiebedarf übermittelt wurde und die Impedanz den vorher festgelegten Schwellenwert unterschreitet.

15. Verfahren nach einem der Ansprüche 12 bis 14, **dadurch gekennzeichnet, dass** für das mindestens eine elektrisch antreibbare Fahrzeug (3) eine erste Kommunikationseinrichtung für das Senden von Fahrzeuginformationen (26) und für die Schutzeinrichtung (55) eine zweite Kommunikationseinrichtung für das Empfangen der Fahrzeuginformationen (26) verwendet werden.

## Claims

1. Protective device (55), wherein the protective device (55) is designed to provide a signal for opening a circuit breaker (34) in the event of a short-circuit detected using the impedance of a contact line (5,6,7) of a traction power supply,
**characterised in that**
the protective device (55) is suitable for receiving vehicle information (26) on an increased energy requirement from at least one electrically drivable vehicle (3) and for taking into consideration the effect of the increased energy requirement on the impedance of the contact line (5,6,7).

2. Protective device (55) according to claim 1, **characterised in that** the protective device (55) is designed to establish the impedance of the contact line (5,6,7) and to rule out a short-circuit if an increased energy requirement has been transmitted and the impedance undershoots a previously established threshold value.

3. Protective device (55) according to claim 1 or 2, **characterised in that** the protective device (55) is designed to detect a short-circuit if no increased energy requirement has been transmitted and the impedance undershoots the previously established threshold value.

4. Protective device (55) according to claim 4, **characterised in that** the protective device (55) is suitable for taking vehicle information (26) into consideration that comprises at least one of the following: a position determined by satellite signal, in particular a GPS position, of the vehicle; a supply section identifier that indicates the position of the supply section presently being used by the vehicle; current and voltage measured values of the contact line at the present position; a binary indicator for an increased energy requirement of the vehicle, which in particular is characterised as true in the event of acceleration operations; a binary indicator for brake energy recovery of the vehicle, which in particular is characterised as true in the event of braking operations.

5. Protective device (55) according to claim 4, **characterised in that** the protective device (55) is designed for the distance protection of a contact line having several supply sections (5,6,7), for undertaking a detection of a short-circuit in each case specifically for the supply section (5,6,7) affected by the short-circuit, and for taking into consideration the effect of the increased energy requirement of the at least one electrically drivable vehicle (3) in the respective supply section.

6. Arrangement (1) for the distance protection of a contact line (5,6,7) of a traction power supply, having:
at least one electrically drivable vehicle (3),
a circuit breaker (34) for connecting an energy supply system (28) to the contact line (5,6,7), and a protective device (55) according to one of the preceding claims,
**characterised in that**
the vehicle (3) is suitable for transmitting an increased energy requirement to the protective device (55), and the protective device (55) is suitable for taking into consideration the effect of the increased energy requirement of the at least one electrically drivable vehicle (3) on the impedance of the contact line (5,6,7).

7. Arrangement (1) according to claim 6, **characterised in that** the at least one electrically drivable vehicle (3) has a first communication device for sending vehicle information (26) and the protective device (55) has a second communication device for receiving the vehicle information (26).

8. Arrangement (1) according to one of claims 6 or 7, **characterised in that** the circuit breaker (34) and/or the protective device (55) are part of a substation (27) of a traction power supply.

9. Arrangement (1) according to one of claims 6 to 8, **characterised in that** the at least one electrically drivable vehicle (3) is a rail vehicle.

10. Arrangement (1) according to one of claims 6 to 8, **characterised in that** the at least one electrically drivable vehicle (3) is a road vehicle.

11. Arrangement (1) according to one of claims 6 to 10, **characterised in that** the at least one electrically drivable vehicle (3) is designed to transmit the first vehicle information (26) in accordance with standard IEC 61850.

12. Method for the distance protection of a contact line (5,6,7) of a traction power supply by means of a protective device according to one of claims 1 to 5, comprising the steps:
establishing an impedance of the contact line or of a supply section (5, 6, 7);
receiving vehicle information (26) on an increased energy requirement from at least one electrically drivable vehicle (3) and taking into consideration the effect of the increased energy requirement on the impedance of the contact line (5,6,7);
providing a signal for opening a circuit breaker (34) in the event of a short-circuit detected using the impedance.

13. Method according to claim 12, **characterised in that** by means of the protective device (55) a short-circuit is ruled out if an increased energy requirement has been transmitted and the impedance undershoots a previously established threshold value.

14. Method according to claim 12 or 13, **characterised in that** by means of the protective device (55) a short-circuit is detected if no increased energy requirement has been transmitted and the impedance undershoots the previously established threshold value.

15. Method according to one of claims 12 to 14, **characterised in that** for the at least one electrically drivable vehicle (3) a first communication device is used for sending vehicle information (26) and for the protective device (55) a second communication device is used for receiving the vehicle information (26).

## Revendications

1. Dispositif (55) de protection, le dispositif (55) de protection étant constitué pour mettre à disposition un signal d'ouverture d'un disjoncteur (34) s'il se produit un court-circuit, détecté à l'aide de l'impédance d'une ligne de contact (5, 6, 7) d'une alimentation en courant de traction,
**caractérisé en ce que**
le dispositif (55) de protection est propre à recevoir des informations (26) de véhicule sur un besoin d'électricité accru d'au moins un véhicule (3) pouvant être entraîné électriquement et à prendre en compte l'effet du besoin d'électricité accru sur l'impédance de la ligne de contact (5, 6, 7).

2. Dispositif (55) de protection suivant la revendication 1, **caractérisé en ce que** le dispositif (55) de protection est constitué pour constater l'impédance de la ligne de contact (5, 6, 7) et exclure un court-circuit s'il a été transmis un besoin d'électricité accru et si l'impédance est inférieure à une valeur de seuil fixée à l'avance.

3. Dispositif (55) de protection suivant la revendication 1 ou 2, **caractérisé en ce que** le dispositif (55) de protection est constitué pour détecter un court-circuit s'il n'a pas été transmis un besoin d'électricité et si l'impédance est inférieure à la valeur de seuil fixée à l'avance.

4. Dispositif (55) de protection suivant la revendication 1, **caractérisé en ce que** le dispositif (55) de protection est propre à prendre en compte des informations (26) de véhicule, qui comprennent au moins l'une des informations suivantes : une position déterminée par un signal par satellite, notamment une position GPS, du véhicule; un indicateur de segment d'alimentation, qui indique la position du segment d'alimentation utilisé actuellement par le véhicule; des valeurs de mesure du courant et de la tension de la ligne de contact à la position instantanée; une caractérisation binaire du besoin d'électricité accru du véhicule, qui est **caractérisée** comme vraie, notamment dans des processus d'accélération; une caractérisation binaire de la récupération d'énergie de freinage du véhicule, qui est **caractérisée** comme vraie, notamment dans des processus de freinage.

5. Dispositif (55) de protection suivant la revendication 4, **caractérisé en ce que** le dispositif (55) de protection est constitué pour une protection à distance d'une ligne de contact ayant plusieurs segments (5, 6, 7) d'alimentation pour effectuer une détection d'un court-circuit spécifiquement pour le segment (5, 6, 7) d'alimentation concerné par le court-circuit et pour prendre en compte l'effet du besoin d'électricité accru du au moins un véhicule (3) pouvant être entraîné électriquement dans le segment d'alimentation respectif.

6. Système (1) pour une protection à distance d'une ligne de contact (5, 6, 7) d'une alimentation en courant de traction, comportant :
au moins un véhicule (3) pouvant être entraîné électriquement,
un disjoncteur (34) de liaison d'un réseau (28) d'alimentation en électricité à la ligne (5, 6, 7) de contact et
un dispositif (55) de protection suivant l'une des revendications précédentes,
**caractérisé en ce que**
le véhicule (3) est propre à transmettre un besoin d'électricité accru au dispositif (55) de protection et le dispositif (55) de protection est propre à prendre en compte l'effet du besoin d'électricité accru du au moins un véhicule (3) pouvant être entraîné électriquement sur l'impédance de la ligne (5, 6, 7) de contact.

7. Système (1) suivant la revendication 6, **caractérisé en ce que** le au moins un véhicule (3) pouvant être entraîné électriquement a un premier dispositif de communication pour envoyer des informations (26) de véhicule et le dispositif (55) de protection a un deuxième dispositif de communication pour la réception des informations (26) de véhicule.

8. Système (1) suivant l'une des revendications 6 ou 7, **caractérisé en ce que** le disjoncteur (34) et/ou le dispositif (55) de protection font partie d'un poste (27) d'une alimentation en courant de traction.

9. Système (1) suivant l'une des revendications 6 à 8, **caractérisé en ce que** le au moins un véhicule (3) pouvant être entraîné électriquement est un véhicule ferroviaire.

10. Système (1) suivant l'une des revendications 6 à 8, **caractérisé en ce que** le au moins un véhicule (3) pouvant être entraîné électriquement est un véhicule routier.

11. Système (1) suivant l'une des revendications 6 à 10, **caractérisé en ce que** le au moins un véhicule (3) pouvant être entraîné électriquement est constitué pour transmettre les premières informations (26) de véhicule suivant la norme IEC 61850.

12. Procédé de protection à distance d'une ligne (5, 6, 7) de contact d'une alimentation en courant de traction au moyen d'un dispositif de protection suivant l'une des revendications 1 à 5, comprenant les stades :
on constate une impédance de la ligne de contact ou d'un segment (5, 6, 7) d'alimentation;
on reçoit des informations (26) de véhicule sur une besoin d'électricité accru d'au moins un véhicule (3) pouvant être entraîné électriquement et on tient compte de l'effet du besoin d'électricité accru sur l'impédance de la ligne (5, 6, 7) de contact;
on met à dispositif un signal d'ouverture d'un disjoncteur (34) s'il se produit un court-circuit détecté à l'aide de l'impédance.

13. Procédé suivant la revendication 12,
**caractérisé en ce que**
l'on exclut, au moyen du dispositif (55) de protection, un court-circuit s'il a été transmis un besoin d'électricité accru et si l'impédance est inférieure à une valeur de seuil fixée à l'avance.

14. Procédé suivant la revendication 12 ou 13, **caractérisé en ce que** l'on détecte, au moyen du dispositif (55) de protection, un court-circuit s'il n'a pas été transmis de besoin d'électricité accru et si l'impédance est inférieure à la valeur de seuil fixée à l'avance.

15. Procédé suivant l'une des revendications 12 à 14, **caractérisé en ce que** l'on utilise, pour le au moins un véhicule (3) pouvant être entraîné électriquement, un premier dispositif de communication pour l'envoi d'informations (26) de véhicule et, pour le dispositif (55) de protection, un deuxième dispositif de communication pour la réception des informations (26) de véhicule.
